(19) Europäisches Patentamt
European Patent Office
Office européen des brevets

(11) **EP 3 191 297 B1**

(12) **EUROPÄISCHE PATENTSCHRIFT**

(45) Veröffentlichungstag und Bekanntmachung des Hinweises auf die Patenterteilung:
**10.03.2021 Patentblatt 2021/10**

(21) Anmeldenummer: **15757228.0**

(22) Anmeldetag: **28.08.2015**

(51) Int Cl.:
*B32B 7/00* (2019.01)   *B32B 7/02* (2019.01)
*B32B 7/04* (2019.01)   *B32B 7/10* (2006.01)
*B32B 7/12* (2006.01)   *B32B 17/00* (2006.01)
*B32B 27/00* (2006.01)   *B32B 27/06* (2006.01)
*B32B 27/08* (2006.01)   *B32B 27/18* (2006.01)
*B32B 27/28* (2006.01)   *B32B 27/30* (2006.01)
*B32B 27/36* (2006.01)   *B32B 1/00* (2006.01)
*B32B 1/04* (2006.01)   *B32B 3/00* (2006.01)
*B32B 3/02* (2006.01)   *B32B 3/04* (2006.01)

(86) Internationale Anmeldenummer:
**PCT/EP2015/069718**

(87) Internationale Veröffentlichungsnummer:
**WO 2016/037865 (17.03.2016 Gazette 2016/11)**

(54) **BLENDE FÜR KRAFTFAHRZEUGVERSCHEIBUNGSSYSTEME**

WIND SCREEN FOR VEHICLE AUTOMOBILES

PARE-BRISE POUR VÉHICULES AUTOMOBILES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.09.2014 EP 14184464**

(43) Veröffentlichungstag der Anmeldung:
**19.07.2017 Patentblatt 2017/29**

(73) Patentinhaber: **Covestro Intellectual Property GmbH & Co. KG**
**51373 Leverkusen (DE)**

(72) Erfinder:
• **BRAMBRINK, Roland**
**42799 Leichlingen (DE)**
• **DORIN, Florian**
**50733 Köln (DE)**
• **MEYER, Alexander**
**40489 Düsseldorf (DE)**
• **CAPELLEN, Peter**
**47803 Krefeld (DE)**
• **NAWROTH, Manfred**
**51688 Wipperfürth (DE)**

(74) Vertreter: **Levpat**
**c/o Covestro AG**
**Gebäude 4825**
**51365 Leverkusen (DE)**

(56) Entgegenhaltungen:
WO-A1-2013/079478    CA-A1- 1 143 607
FR-A1- 2 543 535    GB-A- 2 299 052
KR-B1- 100 738 461    US-A- 4 321 777
US-A1- 2003 064 226    US-A1- 2003 194 561

# EP 3 191 297 B1

**Beschreibung**

Die Erfindung betrifft eine Blende für Kraftfahrzeugverscheibungssysteme, umfassend eine Basisschicht mit einer Vorderseite und einer Rückseite sowie die Vorderseite und die Rückseite verbindenden Seiten. Ferner betrifft die Erfindung ein Verbundsystem umfassend eine Karosserie eines Fahrzeugs und eine Blende.

Gegenstand der vorliegenden Erfindung sind demnach Blenden mit zumindest in Teilbereichen glasähnlicher Optik für Kraftfahrzeugverscheibungssysteme sowie Verbunde aus Blenden-Kraftfahrzeugverscheibungssystemen und Karosserieteilen. Es werden außerdem für deren Herstellung geeignete Materialkombinationen sowie ein Verfahren zur Herstellung der Verbunde beschrieben.

Blenden für Kraftfahrzeugsysteme sind bekannt. Um im Automobilbau einen Übergang von Verscheibungssystemen zu umgebenden Karosserieteilen zu realisieren, werden häufig Blenden eingesetzt. Hierbei müssen von solchen Blenden nicht nur die allgemeinen Anforderungen für Exterieurbauteile im Automobil erfüllt werden. Vielmehr müssen in diesem Rahmen ambitionierte Detailanforderungen erfüllt werden. So muss die Optik mindestens die guten Eigenschaften von Glas erreichen und soll diese im Idealfall sogar übertreffen. Ferner muss sichergestellt sein, dass diese Eigenschaften wie Farbtiefe, Schwarz- und Glanzeindruck, Farbe und Oberflächenqualität über lange Zeiträume konstant bleiben oder sich nur geringfügig verändern. Deshalb ist eine hohe Bewitterungsfestigkeit des Gesamtaufbaus erforderlich. Ferner sollen die mechanischen Eigenschaften über einen langen Zeitraum erhalten bleiben. Ferner sollten die thermoplastischen Teile über eine ausreichende Kratzfestigkeit verfügen. Ferner soll sich der Lack im Verbund mit dem Polycarbonat nicht verändern. Da die Blenden oft eine gekrümmte Form aufweisen und Kanten und Rundungen aufweisen, gibt es ein unterschiedliches Lackablaufverhalten, was zu unterschiedlichen Schichtdicken an verschiedenen Bauteilpositionen führt. Es sollte jedoch über das gesamte Bauteil, auch an den Kanten, ein gewisses Schichtdickenfenster eingehalten werden. Die Blende sollte ferner über eine feste Anbindung an die Karosserie verfügen und sollte sich durch Wärmausdehnung oder andere mechanische Einflüsse nicht beschädigt werden. Weiterhin soll die Blende ggf. Funktionselemente einbinden.

Darüber hinaus sollte die Materialauswahl sowie die Gestaltung der Blendenausführung derart sein, dass die Funktion des jeweils verwendeten Verscheibungssystems möglichst optimal unterstützt wird. Letzteres gilt insbesondere für bewegliche Verscheibungskonstruktionen im Dachbereich von Kraftfahrzeugen, wie zum Beispiel Falt- oder Schiebedächern. Es ist somit Aufgabe der vorliegenden Erfindung, Blenden mit zumindest in Teilbereichen glasähnlicher Optik für Kraftfahrzeugverscheibungssysteme zur Verfügung zu stellen, wobei die Blenden bevorzugt hervorragende optische Eigenschaften, z.B. hinsichtlich Schwarzeindruck, Farbtiefe und Glanz, sowie eine hohe Bewitterungsfestigkeit und ausreichende Lackhaftung aufweisen sollen.

Bei den Blenden handelt es sich üblicherweise um Mehrschichtsysteme, umfassend eine Basisschicht und eine Beschichtung, die üblicherweise aus einer oder mehreren konventionellen Lackschicht/en hergestellt wird. Bei der Beschichtung handelt es sich üblicherweise um eine UV-Schutz- und/oder Kratzfestbeschichtung. Beispielsweise umfasst die Beschichtung eine UV-Absorber-haltige Grundschicht und einer darauf aufgetragene Kratzfestbeschichtung. Die Schichtdicken konventioneller Klarlacke müssen sich zum Erreichen optimaler Eigenschaften in einem definierten Schichtdickenfenster befinden. Eine Mindestschichtdicke ist z.B. für einen optimalen UV-Schutz oder eine optimierte Prozesszeit notwendig. Häufig sind bestimmte Mindestschichtdicken auch wesentlich, um die Blende gut mit der Fahrzeugkarosserie verkleben zu können. Zu hohe Schichtdicken der Beschichtung können jedoch sehr schnell zu einer Versprödung führen, wodurch eine erhöhte Gefahr der Rissbildung besteht. Häufig finden die Schäden ihren Anfang an den seitlichen Kanten der Bauteile. Die Schichtdicken der Beschichtungen sollten daher die von den Herstellern angegebenen Schichtdicken berücksichtigen. Bedingt durch die möglichen Bauteilgeometrien und/oder Lackierverfahren wie z.B. Tauchen oder Fluten kommt es aber herkömmlich zu unterschiedlichen Lackdicken über die Flächen der Blenden, d.h. zu einem ungewollten Lackdickenprofil. Insbesondere kommt es an den Kanten und Ecken der Blenden, vor allem beim Übergang zu Rippen, zu Lackanhäufungen, was in der Praxis zu den oben genannten Qualitätsproblemen führt.

WO 2013/079478 A1 offenbart eine Blende für Kraftfahrzeugverscheibungssysteme, umfassend eine Basisschicht, basierend auf einem thermoplastischen Kunststoff und eine UV-Schutz und Kratzfestbeschichtung.

Es bestand daher die Aufgabe, Blenden bereitzustellen, die die vorstehenden Nachteile vermeiden und sich auch im Kantenbereich möglichst gleichmäßig beschichten lassen.

Die gestellte Aufgabe wird erfindungsgemäß durch eine Blende gemäß Anspruch 1 gelöst. Eine solche Blende für Kraftfahrzeugverscheibungssysteme - die aber auch anderweitig verwendbar ist - umfasst eine Basisschicht, basierend auf einem thermoplastischen Kunststoff, mit einer Vorderseite und einer Rückseite sowie die Vorder- und die Rückseite verbindenden Seiten, welche dadurch gekennzeichnet ist, dass die Kanten zwischen den die Vorder- und die Rückseite der Basisschicht verbindenden Seiten und der Vorderseite der Basisschicht verrundet sind, wobei die Blende auf der Vorderseite und im verrundeten Kantenbereich der Vorderseite eine Beschichtung aufweist, wobei die Verrundung einen über die Verrundung variablen Radius aufweist.

Mit "Vorderseite" ist erfindungsgemäß die Seite der Blende gemeint, welche beispielsweise bei einer in einem Kraftfahrzeug verbauten Blende nach außen weist. "Kanten" im Plural berücksichtigt die Anordnung der Kante in überwiegend verschiedenen Raumrichtungen. Da die Kanten an den diversen Seiten der Blende üblicherweise ineinander übergehen, steht "Kanten" auch für eine zusammenhängende, um die Blende laufende Kante.

"Auf der Vorderseite eine Beschichtung aufweist" bedeutet bevorzugt, dass die Beschichtung auch im Kantenbereich vorliegt, d.h. im Bereich der verrundeten Kante, welche sich an die Vorderseite der Blende anschließt. Besonders bevorzugt bedeckt die Beschichtung die gesamte Vorderseite und den gesamten sich an die Vorderseite direkt anschließenden Kantenbereich.

Erfindungsgemäß sind die nachfolgend beschriebenen Formen der Kantenverrundung bevorzugt, da sich für diese gezeigt hat, dass sich der Lack für eine Beschichtung, welcher auf eine Basisschicht der Blende aufgetragen wird, in diesen Fällen besonders gleichmäßig auf der Basisschicht der Blende verteilt und so über die Fläche der Vorderseite bzw. der Rückseite der Blende eine gleichmäßig dicke Beschichtung ausbildet.

Unter "Verrundung" wird erfindungsgemäß verstanden, dass der Übergang zwischen zwei Flächen nicht in Form einer scharfen Kante ausgebildet ist, sondern abgerundet ist. Dabei zeigt die Wölbung, vom Kern der Basisschicht aus betrachtet, nach außen.

Erfindungsgemäß sind auch solche Ausgestaltungen umfasst, bei denen die gesamte Blendenfläche, d.h. auch die Vorderseite und optional auch die Rückseite, gekrümmt sind, d.h. die Vorderseite und die Rückseite der Basisschicht müssen nicht zwingend als ebene Flächen ausgeführt sein.

Nach einer ersten vorteilhaften Ausgestaltung der Erfindung sind neben der erfindungsgemäßen Verrundung der Kanten zwischen den die Vorder- und die Rückseite der Basisschicht verbindenden Seiten und der Vorderseite der Basisschicht auch die Kanten zwischen den die Vorder- und die Rückseite der Basisschicht verbindenden Seiten und der Rückseite der Basisschicht verrundet, wobei die Blende auf der Rückseite bevorzugt eine Beschichtung aufweist. Bei einer zusätzlichen Verrundung zwischen den die Vorder- und die Rückseite der Basisschicht verbindenden Seiten und der Rückseite der Basisschicht ist auch diese Verrundung bevorzugt mit variablem Radius ausgeführt.

Nach einer weiteren vorteilhaften Ausgestaltung der Erfindung weist die Blende eine U-, O-, Doppel-O-, T- oder I-Geometrie, bezogen auf die Rückseite und die Vorderseite der Blende, auf. Es versteht sich, dass auch weitere Geometrien möglich sind.

Es schließt sich, bei einer bevorzugten Ausführungsform, an die verrundete Kante auf der eine Beschichtung aufweisenden Seite der Blende ein Übergangsbereich ohne Verrundung an, der im Querschnitt durch die Vorder- und Rückseite der Blende durch einen Anstieg entlang einer Geraden gekennzeichnet ist und einen Übergang zwischen dem abgerundeten Kantenbereich und der Vorder- bzw. der Rückseite der Blende - der beschichteten Blendenseite - schafft. Sofern lediglich die Vorderseite der Blende beschichtet ist, liegt ein solcher Übergangsbereich zwischen der zur Vorderseite hin liegenden verrundeten Kante und der Fläche der Vorderseite der Blende. Diese zur Vorderseite hin liegende verrundete Kante wird vorliegend als "obere verrundete Kante" und die zur Rückseite hin liegende verrundete Kante als "untere verrundete Kante" bezeichnet. Es können, aber müssen nicht, eine obere und eine untere verrundete Kante gleichzeitig vorliegen. Die obere verrundete Kante und die untere verrundete Kante sind bevorzugt entweder durch einen geraden senkrechten oder im Wesentlichen senkrechten zur Erstreckung von Vorder- und Rückseite ausgerichteten Übergangsbereich entlang der Kante der die Vorder- und die Rückseite der Blende verbindenden Seiten oder die am weitesten außen liegende Stelle der Verrundung verbunden oder aber die obere verrundete Kante geht direkt in die untere verrundete Kante über.

Ist die Blende im Übergangsbereich der Karosserie und einem transparenten Dachmodul angebracht, ist es bevorzugt, dass die Vorderseite der Blende der Strakkontur folgt. Unter "Strak" wird die Außenkontur eines Kraftfahrzeugs verstanden.

Insbesondere, wenn nur auf der Vorderseite der Basisschicht eine Beschichtung vorliegt, weist die obere verrundete Kante einen größeren Radius auf als die untere verrundete Kante. Erfindungsgemäße Blenden können auch nur eine obere verrundete Kante aufweisen; die untere Kante kann weiterhin eckig sein.

Die Verrundung ist alternativ bevorzugt, insbesondere an der oberen verrundeten Kante, in Form einer Bezierkurve, insbesondere einer quadratischen oder kubischen Bezierkurve ausgebildet oder ist einer solchen angenähert. Auch an der unteren verrundeten Kante kann die Verrundung in Form einer quadratischen oder kubischen Bezierkurve ausgebildet oder einer solchen angenähert sein. Es ist besonders bevorzugt, dass die Verrundung über eine solche Bezierkurve direkt in den ebenen Verlauf der Vorder- bzw. der Rückseite der Blende übergeht.

Eine Bezierkurve ist eine parametrisch modellierte Kurve, die ein Werkzeug bei der Beschreibung von Freiformkurven und -flächen darstellt. Erfindungsgemäß ganz besonders bevorzugt sind kubische Bezierkurven.

Vier Punkte ($P_0$, $P_1$, $P_2$ und $P_3$) bestimmen eine kubische Bezierkurve. Die Kurve beginnt bei $P_0$ und geht in Richtung $P_1$ und dann aus Richtung $P_2$ zu $P_3$. Im Allgemeinen geht die Kurve nicht durch $P_1$ und $P_2$ - diese Punkte dienen nur der Richtungsangabe, wobei $P_1$ die Richtung bestimmt, in welche die Kurve in $P_0$ geht. $P_2$ legt die Richtung fest, aus welcher die Kurve zu $P_3$ geht. Der Abstand zwischen $P_0$ und $P_1$ und der Abstand von $P_2$ und $P_3$ bestimmen, "wie weit" sich die Kurve in Richtung der Kontrollpunkte $P_1$ und $P_2$ bewegt, bevor sie in Richtung $P_3$ läuft.

$$C(t) = \sum_{i=0}^{3} \binom{3}{i} t^i (1-t)^{3-i} P_i$$
$$= (1-t)^3 P_0 + 3t(1-t)^2 P_1 + 3t^2(1-t)P_2 + t^3 P_3$$
$$= (-P_0 + 3P_1 - 3P_2 + P_3)t^3 + (3P_0 - 6P_1 + 3P_2)t^2 + (-3P_0 + 3P_1)t + P_0, t \in [0,1]$$

Mit Hilfe des De-Casteljau-Algorithmus ausgedrückt: $C(t) = C_0^3(t)$

$$C_0^3(t) = (1-t)\underbrace{\left\{(1-t)\overbrace{\left[(1-t)P_0 + tP_1\right]}^{C_0^1(t)} + t\overbrace{\left[(1-t)P_1 + tP_2\right]}^{C_1^1(t)}\right\}}_{C_0^2(t)} +$$

$$+ t\underbrace{\left\{(1-t)\overbrace{\left[(1-t)P_1 + tP_2\right]}^{C_1^1(t)} + t\overbrace{\left[(1-t)P_2 + tP_3\right]}^{C_2^1(t)}\right\}}_{C_1^2(t)}$$

Die Auswertung an den Stellen mit $\tilde{t} = t$ gibt den Verlauf der Bezierkurve an:

$$C_0^3(t) = \tilde{C}_0^3(t,t).$$

Der Radius r für einen Punkt der verrundeten Kante, betrachtet im Querschnitt durch die Vorder- und die Rückseite der Blende, ist gleich dem Radius eines fiktiven Kreises, auf dessen Linie der Punkt liegen würde. Der Radius r ist bevorzugt über die Länge der Bereichs der verrundeten Kante variabel, d.h. für verschiedene Punkte auf der verrundeten Kante gibt es verschiedene fiktive Kreise. Eine solche Verrundung mit Integration eines Übergangsbogens hat sich erfindungsgemäß als äußerst vorteilhaft erwiesen.

Bevorzugt wird auch für den Übergang in den Flächenbereich der Vorderseite der Blende und/oder der Rückseite der Blende eine Klothoide verwendet.

Bevorzugt beträgt die Breite b von der Außenkante der Blende, d.h. dem äußersten Punkt P der Blende auf Seite der die Vorder- und Rückseite der Basisschicht verbindenden Seite, bis zum Ende E des Kurvenverlaufs einer verrundeten Kante mindestens 1 mm, weiter bevorzugt mindestens 1,5 mm, ganz besonders bevorzugt mindestens 2 mm, besonders bevorzugt mindestens 2,5 mm, ganz besonders bevorzugt mindestens 3 mm.

Die Breite b des unteren abgerundeten Bereichs zwischen den die Vorder- und die Rückseite der Basisschicht verbindenden Seiten und der Rückseite der Basisschicht beträgt vorzugsweise weniger als 2 mm, besonders bevorzugt weniger als 1,75 mm, ganz besonders bevorzugt weniger als 1,5 mm.

Bei gedachter Anordnung der Blende in einem Koordinatensystem verbinden die die Rückseite und die Vorderseite der Blende verbindenden Seiten diese entlang der z-Richtung. Vorder- und Rückseite der Blende liegen, ggf. näherungsweise, in einer x/y-Ebene. Neben der erfindungswesentlichen Kantenverrundung der Kanten zwischen den die Vorder- und die Rückseite der Blende verbindenden Seiten und der Vorderseite der Blende und/oder zwischen den die Vorder- und die Rückseite verbindenden Seiten der Blende und der Rückseite der Blende ist es erfindungsgemäß bevorzugt, wenn zusätzlich auch Winkel bzw. Ecken, die sich durch die Übergangsbereiche der in der x/y-Ebene der Blende längserstreckenden Schenkel ergeben, abgerundet sind.

Unter "Schenkel" einer Blende wird ein Abschnitt einer Blende verstanden, der sich winklig an einen anderen Abschnitt derselben Ebene einer Blende anschließt.

Unter "Innenwinkel" R1 wird der abgerundete Bereich des Winkels im Übergangsbereich zwischen zwei Schenkeln beschrieben. Der Innenwinkel R1 in der gedachten x/y-Ebene beschreibt bevorzugt, genau oder mindestens näherungsweise, einen Viertelkreis. Der Radius dieses Viertelkreises beträgt bevorzugt mindestens 8 mm, idealerweise mindestens 10 mm, um bei thermischer Ausdehnung möglichst geringe Spannungen im Bauteil zu erhalten. Es ist weiterhin bevorzugt, wenn zusätzlich zu einem solchen abgerundeten Verlauf des Innenwinkels die Kantenverrundung zwischen den die Vorder- und die Rückseite der Basisschicht verbindenden Seiten und der Vorderseite der Basisschicht einer Bezierkurve folgt.

Dehnungswerte in Summe < 1%, insbesondere < 0,8% sind anzustreben. Der Radius des Innenwinkels R1 zwischen den Schenkeln und auch die Kantenverrundung sind besonders dann wichtige Parameter, wenn das Bauteil anschließend mit einer Kratzfestbeschichtung beschichtet wird. Hohe Spannungen führen zu einem frühzeitigen Versagen des Lackes. Bei Blenden besonderer Formen entsteht unter Wärmedehnung eine sehr komplexe Verformung, die zu einer hohen Zugspannung auf der Oberseite der Blende führt, die insbesondere im "inneren Eckbereich" zum Rand hin immer größer wird. Je näher die Außenkante an der für diesen Lastfall neutralen Faser liegt, desto geringer werden die Dehnungen.

Dies wird durch eine möglichst geringe Wanddicke der Blende gelöst. Bevorzugt beträgt die Wanddicke 1,5 mm - 5 mm, besonders bevorzugt 2 mm - 3,5 mm. Unter "Wanddicke" wird erfindungsgemäß der größte Abstand zwischen Vorder- und Rückseite der Blende, umfassend die Basisschicht und die Beschichtung, verstanden. Bei Kältedehnung werden die Schenkel nach Außen gebogen (annähernd in einer Linie). Je kleiner der Radius des Innenwinkels R1 dann hier ist, desto höher werden die lokalen Spannungen (Kerbwirkungen). Daher muss ein Kompromiss zwischen dem technisch Sinnvollen und dem Design gefunden werden.

Bevorzugt liegt folglich eine Abrundung aller geraden Kanten gleichzeitig in alle Richtungen, d.h. in der x/y-Ebene und auch in z-Richtung, vor.

Überraschenderweise wurde gefunden, dass das erfindungsgemäße Formteil eine verbesserte Lackierbarkeit aufweist. Insbesondere ist das Formteil wesentlich gleichmäßiger lackierbar, was sich in einem gleichmäßigeren Schichtdickenprofil bemerkbar macht. Hierdurch kann die für einen gegebenen Lack minimale und maximale Schichtdicke gesteuert und eingehalten werden. Dies gilt insbesondere für Anflut- und Abtropfkante. Daraus ergeben sich eine verbesserte Farbtiefe, wenn es sich z.B. um farbige Lacke handelt, oder verbesserte Bewitterungseigenschaften, wenn es sich um funktionelle Lacke handelt.

Ein weiterer Vorteil ist, dass, ohne an die Theorie gebunden zu sein, durch die Formgebung der im Beschichtungsprozess unten liegenden Kante die Abtropfkante hinter den Sichtbereich und damit hinter die Bewitterungskante des eingebauten Formteils gelegt wird, wodurch sich verbesserte Bewitterungseigenschaften ergeben.

Die erfindungsgemäßen Blenden werden bevorzugt eingesetzt

- im Übergangsbereich von Fahrzeugdach (Karosserie) und transparenten Dachmodulen, bevorzugt transparenten Panorama-, Falt- oder Schiebedachmodulen,
- im Übergangsbereich von Motorhaube zur Frontscheibe,
- im Übergangsbereich zwischen A-Säule bzw. A-Säulenverkleidung und Frontscheibe oder
- im Übergangsbereich zwischen Heckscheibe und Fahrzeugdach.
- als B-, C- und D-Säulenverblendung

Die erfindungsgemäßen Blenden werden direkt oder über einen Trägerrahmen, der aus Metall oder Kunststoff gefertigt sein kann, mit der Fahrzeugkarosserie verbunden. Die Verbindung zwischen Blende und Rahmen sowie zwischen Rahmen und Fahrzeugkarosserie kann durch Verkleben, Verschrauben und/oder über Schnappverbindungen realisiert werden. Wird die Blende direkt mit der Fahrzeugkarosserie verbunden, erfolgt dieses bevorzugt über eine Verklebung.

Zur Verklebung können sowohl Nassklebstoffe, Kontaktklebstoffe, Schmelzklebstoffe oder Reaktionsklebstoffe eingesetzt werden. Besonders geeignet für diese Technologie sind ein- oder zweikomponentige Strukturklebstoffe auf Polyurethanbasis mit unterschiedlichen Steifigkeiten. Es können jedoch auch z.B. Klebstoffe auf Acryl/Acrylat-, Methylmethacrylat-, Silikon- oder Epoxidharzbasis verwendet werden. Es kann sich bei dem Klebstoff auch um einen thermoplastisch verarbeitbaren Schmelzkleber handeln.

Die Kleberaupe ist bei erfindungsgemäßen Blenden vorzugsweise so gestaltet, dass sich die Blende möglichst frei verformen kann und so die Dehnungen auf eine große, breite Fläche verteilt werden. Um die Kleberaupe also erfindungsgemäß möglichst gut zu positionieren, sollte der Bereich um den Innenwinkel zwischen zwei aufeinandertreffenden Schenkeln möglichst frei von Verklebungen sein, die Kleberaupe sollte hier extra unterbrochen werden. Des Weiteren hat es sich als vorteilhaft herausgestellt, die Kleberaupe entlang der Schenkel mit zusätzlichen Unterbrechungen aufzutragen. Bevorzugt ist die Kleberaupe als dünner Streifen mittig auf den beiden außen liegenden Schenkeln verteilt und außerdem in Form eines langgezogenen Rechtecks mit abgerundeten Kanten auf dem die beiden außen liegenden Schenkel verbindenden Schenkel.

Bevorzugt ist die Klebstoffschicht zwischen 5 mm und 20 mm breit und hat eine Dicke von 0,5 mm bis 10 mm. Besonders bevorzugt ist die Klebstoffschicht 10 mm bis 15 mm breit und 3 mm bis 6 mm dick. Die Ausdehnung der Klebstoffschicht in die dritte Richtung richtet sich nach den Ausmaßen des Bauteils. Vorzugsweise sollte ein möglichst weicher Zweikomponenten-Klebstoff mit einer Härte von Shore A 50 - 85 eingesetzt werden. Besonders bevorzugt hat der Klebstoff eine Härte von 60 -75 Shore A.

Bevorzugt findet sich die erfindungsgemäße Gestaltung von Blenden bei solchen Blenden, die zusätzlich im Randbereich, an oder nahe an der Außenkante der Blende, mindestens eine Rippe aufweisen. Rippen werden üblicherweise zur Erhöhung der Steifigkeit und damit Erleichterung der späteren Montage vorgesehen. Hierbei können sie auch als Montageanhaltspunkte dienen, indem sie den Abstand der Außenfläche zur Unterkonstruktion durch ihre Höhe vorgeben. Sie können auch zur Aufnahme oder Fixierung von z.B. Dichtlippen dienen. Rippen bei einteilig im Spritzguss hergestellten Elementen führen zu lokalen Massenanhäufungen, was beim Abkühlen zu einer Schwindung des Materials an solchen Stellen führen kann. Hierdurch entstehen Einfallstellen an der Oberfläche des Elementes. Selbst, wenn die Ausprägung der Einfallstelle minimal gehalten und optisch eigentlich nicht wahrnehmbar ist, stellen solche Einfallstellen beim Beschichten grundsätzlich ein Problem dar, da sich in diesen der Lack sammeln kann und von dort somit nur verzögert abläuft, was zu einem ungünstigen Lackfluss, Nasen und/oder Läufern führt. Bevorzugt beträgt das Verhältnis der Breite der Rippe zu der Wanddicke der Basisschicht der Blende maximal 1:2, um das Entstehen von Einfallstellen zu minimieren. Durch die erfindungsgemäße Kantenverrundung, die vorzugsweise so ausgeführt ist, dass die Verrundung bis hinter die Rippen und damit bis hinter die Einfallstelle verläuft, kann erreicht werden, dass die Einfallstelle in der Basisschicht zum einen optisch nicht mehr sichtbar ist und zum anderen, dass der Lack in diesem Bereich besser ablaufen kann.

In die erfindungsgemäßen Blenden können übliche Funktionselemente eingearbeitet sein. Solche Funktionselemente, die in den/die erfindungsgemäßen Blenden integral aus-, angeformt und/oder eingebunden sein können, sind insbesondere:

a) Antennen, zum Beispiel zum Empfang von analogen oder digitalen Radiosignalen, GPS und/oder UMTS, wobei die Antennen im Rahmen der vorliegenden Erfindung über teil- oder vollflächig auf die zum Fahrzeuginnenraum zeigende Oberfläche der Blende aufgebrachte funktionalisierte Folien, d.h. auf der Rückseite der Blende aufgebrachte Folien, realisiert werden können. Alternativ können die Antennen auch direkt auf die Blendenoberfläche durch geeignete Druckverfahren aufgebracht werden, wobei im Rahmen der vorliegenden Erfindung eine Bedruckung nach dem Printing-Verfahren, z.B. Aerosol Jet Printing, oder dem Siebdruckverfahren bevorzugt ist;
b) Schraubdome, Gravuren für Kleberaupen, Rippen, Schnappverbindungselemente;
c) Dekore oder Logos, welche bevorzugt über transparente bedruckte Folien auf der vom Fahrzeuginnenraum abgewandten Seite - d.h. auf der Vorderseite der Blende - auf die Blendenoberfläche teil- oder vollflächig aufgebracht sind;
d) Funktionselemente zum Wassermanagement sowie Spoiler, welche beide im Rahmen der Erfindung bevorzugt durch eine funktionale Designgebung integraler Bestandteil der Blende selbst sind und nicht angeformt werden;
e) Fahrerassistenzsysteme/Diebstahlschutz, beispielsweise Abstandsradar, Mauterfassungssysteme oder Monitoring Systeme;
f) transparente Polycarbonat/PMMA-Folien zum UV-Schutz, bevorzugt auf der Vorderseite der Blende vollflächig aufgebracht, d.h. auf der zur Fahrzeugumgebung gerichteten Seite der Blende;
g) eine auf der Rückseite der Blende vollflächig angebrachte schwarze Folie;
h) Elemente in Form einer Folie oder zusätzlichen Beschichtung für Thermo-Management durch zusätzliche IR-Reflexion/IR-Absorption.

Es hat sich gezeigt, dass es vorteilhaft ist, die erfindungsgemäßen Blenden in Form eines Mehrschichtsystems einzusetzen. Dieses hat den besonderen Vorteil, durch die verschiedenen Schichten den hohen Anforderungen an die mechanischen und thermischen Eigenschaften gerecht werden zu können und gleichzeitig eine hohe Kratzfestigkeit und einen guten Bewitterungsschutz zu gewährleisten.

Im Rahmen der vorliegenden Erfindung hat es sich als vorteilhaft erwiesen, eine Basisschicht, basierend auf einem thermoplastischen Kunststoff, insbesondere auf Polycarbonat, wie folgt mit zusätzlichen Schichten als Außenbeschichtung zu versehen, wobei vorzugsweise folgende weitere Schichten vorliegen, jeweils auf der Vorderseite und ggf. auf der Rückseite der Blende:

-  eine zweischichtige Beschichtung aus einem Primer und einer Decklackschicht, wobei der Primer optional einen UV-Absorber enthält und/oder die Deckschicht bevorzugt auf Polysiloxanbasis ist, jeweils auf der Vorder- und/oder der Rückseite der Blende, wobei die Rückseite der Blende die zum Fahrzeuginnenraum zeigende Seite der Blende und die Vorderseite der Blende die zur Fahrzeugumgebung gerichtete Seite der Blende meint, oder
-  eine einschichtige Beschichtung in Form eines Klarlacks (z.B. UV-härtender oder thermisch härtender Lack), oder
-  eine einschichtige Beschichtung in Form eines Polysiloxanlacks oder einer auf Polyurethan basierenden Lackierung.

"Basierend auf einem thermoplastischen Kunststoff" bedeutet, dass die überwiegend vorhandene Komponente im Material der Basisschicht ein thermoplastischer Kunststoff ist. Die Zusammensetzung, aus welcher die Basisschicht besteht, kann Anteile weiterer thermoplastischer Kunststoffe oder Additive enthalten.

Zwischen der Basisschicht und der Beschichtung kann eine zusätzliche Schicht, beispielsweise eine Polycarbonat-Schicht, angeordnet sein. Bevorzugt ist diese Schicht eine coextrudierte Folie aus Polycarbonat, besonders bevorzugt eine Polycarbonat-Folie mit dünner PMMA-Schicht, wobei die PMMA-Schicht außen, auf Seite der Vorderseite der Blende, liegt, oder eine mehrschichtige Folie aus Polycarbonat, einer IR-Strahlung reflektierenden Schicht aus Polycarbonat und ggf. weiteren Schichten.

Auch ist es möglich, über Plasmaschichten Funktionen in den Schichtaufbau zu integrieren. Solche Funktionen können sein: Kratzfestbeschichtungen, Hydrophobie und Hydrophilie, Antireflex-Schichten etc. Bevorzugt ist die Plasmaschicht eine durch Plasmaprozesse abgeschiedene Hart-Beschichtung, wie z.B. eine glasartige Schicht, bestehend aus Siloxanen.

Thermoplastische Kunststoffe, die zur Herstellung der erfindungsgemäßen Blenden verwendet werden können, auf denen die Basisschicht also basiert, sind insbesondere Polycarbonat, Copolycarbonat, Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), Polyamid, cyclisches Polyolefin, Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona), bevorzugt Polycarbonat, Copolycarbonat, Polyestercarbonat, aromatische Polyester oder Polymethylmethacrylat oder Mischungen der genannten Komponenten, besonders bevorzugt Polycarbonat und Copolycarbonat.

Geeignete Polycarbonate für die Herstellung der erfindungsgemäßen Kunststoffzusammensetzung sind alle bekannten Polycarbonate. Dies sind Homopolycarbonate, Copolycarbonate und thermoplastische Polyestercarbonate.

Auch Mischungen von mehreren thermoplastischen Polymeren, insbesondere, wenn sie transparent miteinander mischbar sind, sind als Material für die Basisschicht geeignet, wobei eine Mischung aus Polycarbonat mit PMMA oder Polyester bevorzugt ist.

Besonders bevorzugt beträgt der Anteil an PMMA 0,2 Gew.-%, ganz besonders bevorzugt 0,1 Gew.-%, bezogen auf die Menge Polycarbonat, wobei das PMMA bevorzugt eine Molmasse (Gewichtsmittel) < 40.000 g/mol aufweist.

Als Material für die Basisschicht der erfindungsgemäßen Blenden ist insbesondere eine Zusammensetzung, enthaltend die folgenden Komponenten, geeignet:

- mindestens einen Thermoplasten, bevorzugt Polycarbonat, insbesondere bevorzugt ein Polycarbonat auf Basis von Bisphenol A oder ein Polycarbonatblend, weiter bevorzugt mit einer Schmelzvolumenrate von

    i. 7 cm$^3$/(10 min) bis 25 cm$^3$/(10 min),
    ii. bevorzugt 9 bis 21 cm$^3$/(10 min), bestimmt nach ISO 1133 (bei 300 °C und 1,2 kg Belastung),

- nanoskaligen Ruß, bevorzugt in einer Menge von

    i. 0,05 bis 0,50 Gew.-%,
    ii. bevorzugt 0,06 bis 0,25 Gew.-%,
    iii. insbesondere bevorzugt 0,08 bis 0,20 Gew.-%,

- sowie ein Entformungsmittel auf Basis eines Fettsäureesters,

    i. bevorzugt ein Stearinsäureester,
    ii. insbesondere bevorzugt auf Pentaerythritbasis, bevorzugt in einer Konzentration von 0,1 bis 0,5 Gew.-%,
    iii. insbesondere bevorzugt von 0,20 bis 0,45 Gew.-%.

Hierbei können selbstverständlich die Merkmale der bevorzugten Ebenen i. bis iii. beliebig miteinander kombiniert werden.

Als nanoskaliger Ruß kommen bevorzugt Farbruße zum Einsatz. Bevorzugt besitzen diese eine mittlere Primärpartikelgröße, bestimmt durch Rasterelektronenmikroskopie, von weniger als 100 nm, bevorzugt von 10 bis 99 nm, weiter bevorzugt von 10 bis 50 nm, besonders bevorzugt von 10 bis 30 nm, insbesondere von 10 bis 20 nm. Die besonders feinteiligen Farbruße sind besonders bevorzugt. Kommerziell erhältliche und im Sinne der Erfindung geeignete Ruße sind unter einer Vielzahl von Handelsnamen und Formen, wie Pellets oder Pulver, erhältlich. So sind geeignete Ruße unter den Handelsnamen BLACK PEARLS®, als nass-verarbeitete Pellets unter den Namen ELFTEX®, REGAL® und CSX®, und in einer flockigen Erscheinungsform unter MONARCH®, ELFTEX®, REGAL® und MOGUL® - erhältlich, alle von Cabot Corporation. Insbesondere bevorzugt sind Ruße, die unter dem Handelsnamen BLACK PEARLS® (CAS-Nr. 1333-86-4) gehandelt werden.

Eine weitere bevorzugte Zusammensetzung der Basisschicht enthält eine Mischung aus Polycarbonat und PMMA mit weniger als 2,0 Gew.-%, vorzugsweise weniger als 1,0 Gew.-%, weiter bevorzugt weniger als 0,5 Gew.-% PMMA, wobei mindestens 0,01 Gew.% PMMA enthalten sind, bezogen auf die Menge Polycarbonat, wobei das PMMA bevorzugt eine Molmasse (Gewichtsmittel) < 40.000 g/mol aufweist.

Besonders bevorzugt ist auf mindestens einer Seite der Basisschicht eine Kratzfestbeschichtung auf Polysiloxanbasis, enthaltend mindestens einen UV-Absorber, wobei die Dicke der Kratzfestschicht bevorzugt von 2 μm bis 15 μm, insbesondere bevorzugt von 4,0 μm bis 12,0 μm, beträgt.

Ganz besonders bevorzugt befindet sich mindestens eine auf der Basisschicht angeordnete haftvermittelnde Schicht (Primerschicht) zwischen der Basisschicht und der Kratzfestschicht, enthaltend mindestens einen UV-Absorber, wobei die Dicke der Primerschicht bevorzugt 0,3 μm bis 6 μm, insbesondere bevorzugt 1,2 μm bis 4,0 μm, beträgt.

Die jeweilige Blende kann wahlweise als 1-Komponenten- oder 2-Komponenten-Spritzguss-Bauteil ausgeführt werden. Bei der Verwendung einer Blende in Form eines 2-Komponenten-Spritzguss-Bauteils wird im Rahmen der vorliegenden Erfindung bevorzugt eine Komponente transparent sowie eine Komponente nicht transparent ausgeführt. Hierbei ist es weiterhin bevorzugt, die Blende so zu verbauen, dass die transparente Komponente der Blende zur Außenseite des Fahrzeuges gerichtet ist. Transparent bedeutet in diesem Zusammenhang, dass ein hinter der Blende liegender Gegenstand bei Überdeckung durch die Blende für das menschliche Auge mindestens in seiner Kontur sichtbar ist. Erfindungsgemäß wird daher unter Transparenz eine Lichttransmission Ty (10°, D65) von größer 5 % und eine Trübung von weniger als 5 %, gemessen nach ASTM D 1003, verstanden. Dabei wird Ty (10°, D65) nach ASTM E 308 berechnet und ist gleich Y10, bezogen auf die Standardlichtquelle D65.

Bei einer bevorzugten Ausführungsform der Erfindung handelt es sich um eine U-Blende, hergestellt als 1-Komponenten-Spritzguss-Bauteil aus einem Polycarbonat als Basisschicht, enthaltend nanoskaligen Ruß, wobei die Blende ein Mehrschichtverbundsystem, d.h. ein System aus mindestens zwei Schichten, ist, wobei eine Schicht eine kratzfeste Beschichtung ist. Kratzfestigkeit wird erfindungsgemäß verstanden als ein Glanzgradverlust von maximal 20 Einheiten, bestimmt nach dem Amtec-Kistler Test (ISO 20566).

In einer weiteren bevorzugten Ausführungsform ist auf beiden Seiten der Basisschicht jeweils eine haftvermittelnde Schicht sowie eine Kratzfestschicht aufgetragen. Die Primerschicht enthält bevorzugt ein organisches Bindematerial, bevorzugt auf PMMA-Basis, das eine Haftvermittlung zwischen der Zusammensetzung auf Basis von dem thermoplastischen Material, bei dem es sich bevorzugt um Polycarbonat handelt, und der Kratzfestbeschichtung, bevorzugt einem polysiloxanbasierten Lack, herstellt.

Als Blendpartner können kautschukmodifizierte Vinyl(co)polymerisate eingesetzt werden. Besonders bevorzugte kautschukmodifizierte Vinyl(co)polymerisate sind beispielsweise ABS-Polymerisate (Emulsions-, Masse- und Suspensions-ABS; ABS = Acrylnitril-Butadien-Styrol), wie sie z.B. in der DE 2 035 390 A (US 3 644 574 A) oder in der DE 2 248 242 A (GB 1 409 275 A) bzw. in Ullmann, Enzyklopädie der Technischen Chemie, Bd. 19 (1980), S. 280 ff. beschrieben sind.

Die Herstellung der Polycarbonate erfolgt vorzugsweise nach dem Phasengrenzflächenverfahren oder dem Schmelze-Umesterungsverfahren, welche dem Fachmann bekannt und vielfach in der Literatur beschrieben sind.

Zum Phasengrenzflächenverfahren sei beispielhaft auf H. Schnell, "Chemistry and Physics of Polycarbonates", Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP 0 517 044 A1 verwiesen.

Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE 10 31 512 B und US 6 228 973 B1 beschrieben.

Die Polycarbonate werden bevorzugt durch Reaktionen von Bisphenolverbindungen mit Kohlensäureverbindungen, insbesondere Phosgen, oder beim Schmelzeumesterungsprozess aus Diphenylcarbonat bzw. Dimethylcarbonat dargestellt.

Hierbei sind Homopolycarbonate auf Basis von Bisphenol-A und Copolycarbonate auf der Basis der Monomere Bisphenol-A und 1,1-Bis-(4-hydroxyphenyl)-3,3,5-trimethylcyclohexan besonders bevorzugt.

Diese und weitere Bisphenol- bzw. Diolverbindungen, die sich für die Polycarbonatsynthese einsetzen lassen, sind unter anderem offenbart in WO 2008/037364 A1 (S.7, Z. 21 bis S. 10, Z. 5), EP 1 582 549 A1 ([0018] bis [0034]), WO 2002/026862 A1 (S. 2, Z. 20 bis S. 5, Z. 14), WO 2005/113639 A1 (S. 2, Z.1 bis S. 7, Z. 20).

Die Polycarbonate können linear oder verzweigt sein. Es können auch Mischungen aus verzweigten und unverzweigten Polycarbonaten eingesetzt werden. Geeignete Verzweiger für Polycarbonate sind aus der Literatur bekannt und beispielsweise beschrieben in den Patentschriften US 4 185 009 A und DE 25 00 092 A1 (erfindungsgemäße 3,3-Bis-(4-hydroxyaryl-oxindole), s. jeweils gesamtes Dokument), DE 42 40 313 A1 (s. S. 3, Z. 33 bis 55), DE 19 943 642 A1 (s. S. 5, Z. 25 bis 34) und US 5 367 044 A sowie in hierin zitierter Literatur. Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP 1 506 249 A1 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Die Polycarbonate können darüber hinaus übliche Polymeraddditive, wie z.B. die in EP 0 839 623 A1, WO 96/15102 A2, EP-A 0 500 496 A1 oder im "Plastics Additives Handbook", Hans Zweifel, 5th Edition 2000, Hanser Verlag, München beschriebenen Flammschutzmittel, optischen Aufheller, Fließverbesserer, organischen oder anorganischen Farbmittel, Thermostabilisatoren, anorganischen Pigmente, Entformungsmittel oder Verarbeitungshilfsmittel enthalten. Ferner können UV-Absorber oder IR-Absorber enthalten sein. Geeignete UV-Absorber sind beispielsweise beschrieben in EP 1 308 084 A1, in DE 10 2007 011 069 A1 sowie in DE 10311063 A1. Geeignete IR-Absorber sind beispielsweise in EP 1 559 743 A1, EP 1 865 027 A1, DE 10022037 A1, DE 10006208 A1 sowie in den italienischen Patentanmeldungen RM2010A000225, RM2010A000227 sowie RM2010A000228 offenbart. Von den in der zitierten Literatur genannten IR-Absorbern sind solche auf Borid- und Wolframatbasis sowie auf ITO (Indium-Zinn-Oxid) und ATO (Aluminium-Zinn-Oxid) basierende Absorber sowie Kombinationen daraus bevorzugt.

Bevorzugt ist der thermoplastische Kunststoff ein Polycarbonat mit einer Molmasse $M_w$ von 22.000 g/mol bis 30.000 g/mol, weiter bevorzugt von 24.000 g/mol bis 28.000 g/mol und besonders bevorzugt von 25.000 g/mol bis 27.000 g/mol, ermittelt durch Gelpermeationschromatographie mit Polycarbonatkalibrierung.

Im Rahmen der vorliegenden Erfindung hat es sich als vorteilhaft herausgestellt, die erfindungsgemäßen Blenden mit Hilfe der Spritzgießtechnologie unter Einhaltung der nachfolgenden Arbeitsschritte herzustellen:

- ggf. Einlegen einer Folie ins Spritzgießwerkzeug,
- Schließen des Werkzeuges,
- Einspritzen einer ersten Polymerzusammensetzung, bevorzugt über Spritzprägen oder Kaskadenspritzguss, anschließende Abkühlung auf eine maximale Bauteiltemperatur kleiner als die Glastemperatur,
- ggf. Drehen der Kavität in die nächste Position, zwecks Einspritzen einer zweiten Polymerzusammensetzung, so dass beim Schließen des Werkzeuges in dieser Position ein Zwischenraum zwischen der ersten verfestigten Polymerzusammensetzung und Werkzeugwand entsteht,
- ggf. Einspritzen der zweiten Polymerzusammensetzung, anschließende Abkühlung auf eine maximale Bauteiltemperatur kleiner als die Glastemperatur.

Die Beschichtung im Anschluss an die Herstellung der Basisschicht der Blenden, wie beispielsweise oben beschrieben, erfolgt beispielsweise auf folgende Weise:

- Entformung,
- Abkühlen des Bauteils auf Raumtemperatur,
- Beschichten des Bauteils mit dem Primer, beispielsweise mit einem PMMA-basierten Primersystem, vorzugsweise UV-Schutz enthaltend, wobei hier die Beschichtung durch Fluten, Tauchen oder Sprühen erfolgen kann,
- Abdunsten der Lösemittel, bis zur Staubtrockene,
- Einbrennen des Primers bei mindestens 125°C, wobei das Einbrennen bevorzugt über einen Zeitraum von mindestens 15 min > 125°C Objekttemperatur erfolgt,
- Abkühlen auf Raumtemperatur,
- Beschichten mit Decklack, beispielsweise mit einem Polysiloxan-basierten Decklack, bevorzugt über Fluten oder Tauchen,
- Abdunsten der Lösemittel, bevorzugt bis zur Staubtrockene,
- Einbrennen des Decklacks bei mindestens 125°C Objekttemperatur, bevorzugt über einen Zeitraum von mindestens 30 Minuten > 125°C Objekttemperatur,
- Abkühlen auf Raumtemperatur.

Alternativ kann die Beschichtung mittels eines bekannten Direct Coating-Schritts im Anschluss an den Spritzguss erfolgen, bevorzugt wie folgt:

- Drehen der Kavität in die nächste Position zwecks Einspritzen der Polyurethan (PU) - Komponente. Beim Schließen des Werkzeuges in dieser Position entsteht ein Zwischenraum zwischen der ersten verfestigten Polymerzusammensetzung und der Werkzeugwand (ggf. kann dieser Schritt auch nach dem Hinterspritzen mit der zweiten Polymerzusammensetzung erfolgen),
- Einspritzen eines Polyurethan-Systems,
- Entformung,
- Abkühlen auf Raumtemperatur.

Anstelle eines Drehens der Kavität bei der Herstellung der Basisschicht oder bei dem Beschichtungsverfahren kann auch ein zweites Werkzeug mit einer anderen Kavität verwendet werden.

Es wird eine Blende mit einer schönen Optik mit hervorragender, glasähnlicher Oberfläche, gutem Hochglanz ohne Einfallstellen und besonders hoher Kratzfestigkeit erhalten.

Im Folgenden wird die Erfindung anhand einiger bevorzugte Ausgestaltungen darstellender Zeichnungen näher erläutert. Es zeigen:

**Figur 1:** eine Draufsicht auf die Vorderseite einer Blende mit U-förmiger Geometrie mit hervorgehobenem Bereich des Innenwinkels zwischen den Schenkeln der Blende;

**Figur 2:** eine Draufsicht auf die Rückseite der Blende aus Figur 1; der Schnitt A'-A' wird in den Figuren 3a bis 3f für verschiedene Ausgestaltungen dargestellt;

**Figur 3a:** eine Querschnittsansicht der in Fig. 2 gezeigten Blende entlang der Linie A'-A' in Fig. 2 in einer ersten Ausgestaltung;

**Figur 3b:** eine Querschnittsansicht der in Fig. 2 gezeigten Blende entlang der Linie A'-A' in Fig. 2 in einer zweiten Ausgestaltung;

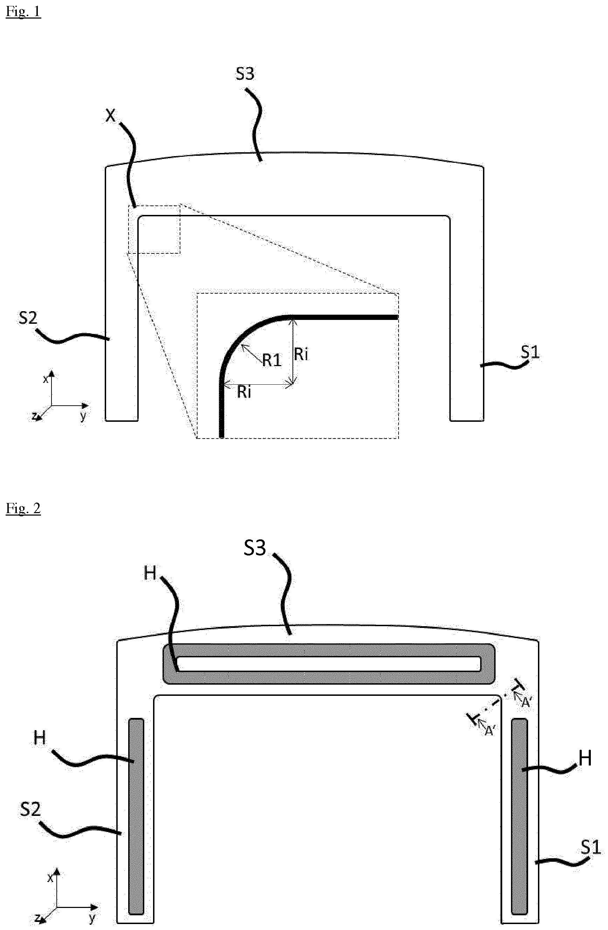

**Fiur 3c:** eine Querschnittsansicht der in Fig. 2 gezeigten Blende entlang der Linie A'-A' in Fig. 2 in einer dritten Ausgestaltung;

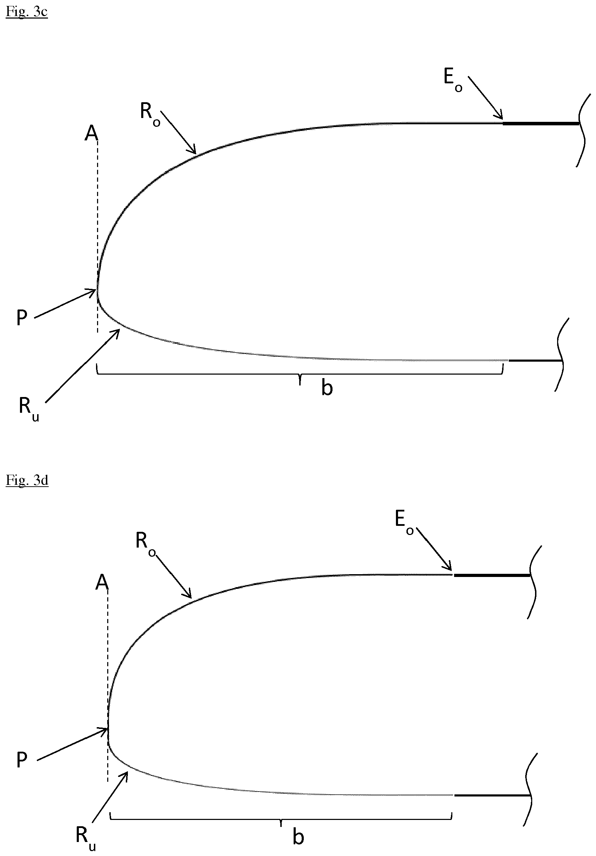

**Figur 3d:** eine Querschnittsansicht der in Fig. 2 gezeigten Blende entlang der Linie A'-A' in Fig. 2 in einer vierten Ausgestaltung;

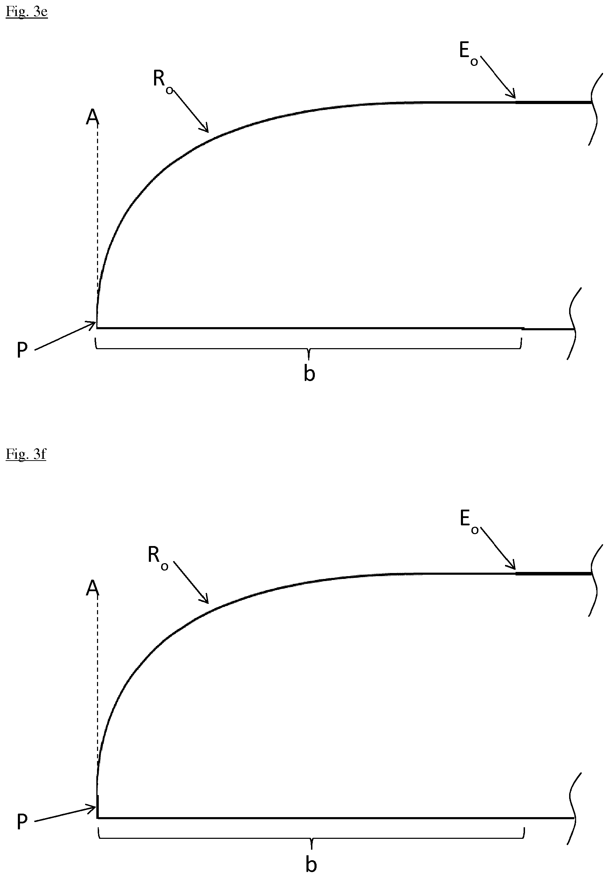

**Figur 3e:** eine Querschnittsansicht der in Fig. 2 gezeigten Blende entlang der Linie A'-A' in Fig. 2 in einer fünften Ausgestaltung;

**Figur 3f:** eine Querschnittsansicht der in Fig. 2 gezeigten Blende entlang der Linie A'-A' in Fig. 2 in einer sechsten Ausgestaltung;

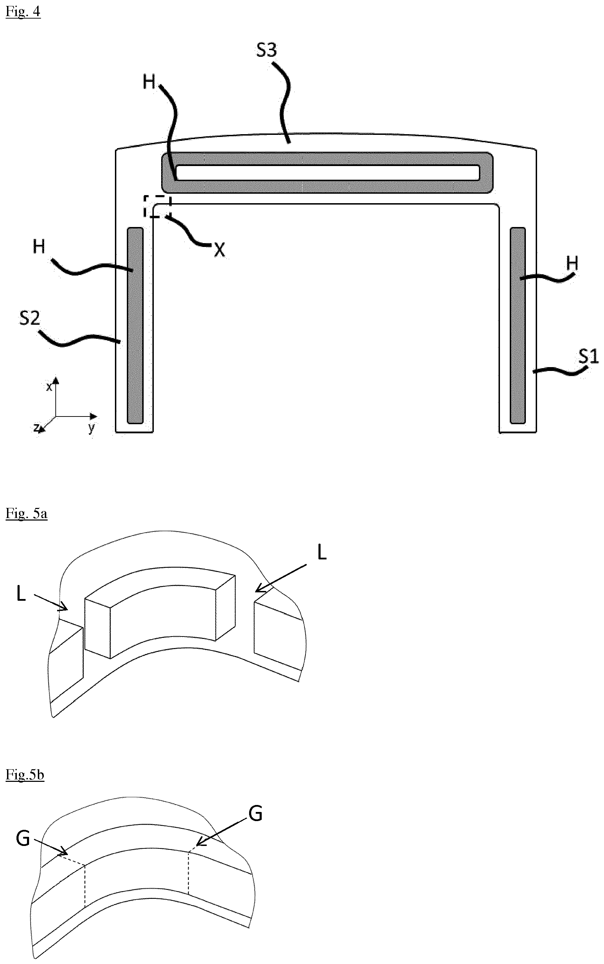

**Figur 4:** eine Draufsicht auf die Rückseite der Blende aus Fig. 1 unter Hervorhebung des Bereichs X, in welchem der Innenwinkel zwischen zwei Schenkeln liegt;

**Figur 5a:** eine perspektivische Ansicht von in dem in Fig. 4 gezeigten Innenwinkelbereich X angebrachten Rippen in einer ersten Ausgestaltung;

**Figur 5b:** eine perspektivische Ansicht von in dem in Fig. 4 gezeigten Innenwinkelbereich X angebrachten Rippen in zweiten Ausgestaltung;

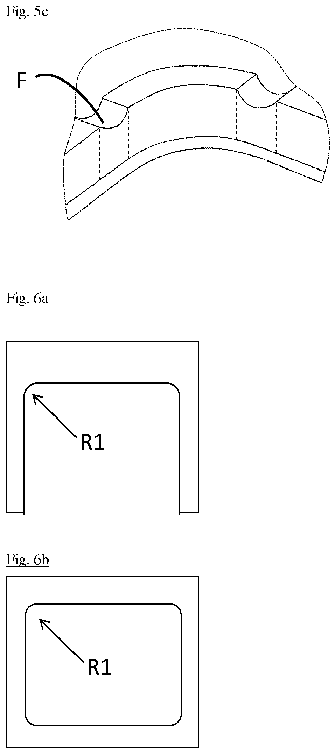

**Figur 5c:** eine perspektivische Ansicht von in dem in Fig. 4 gezeigten Innenwinkelbereich X angebrachten Rippen in dritten Ausgestaltung;

**Figur 6a:** Draufsicht auf die Vorderseite einer U-Blende;

**Figur 6b:** Draufsicht auf die Vorderseite einer O-Blende;

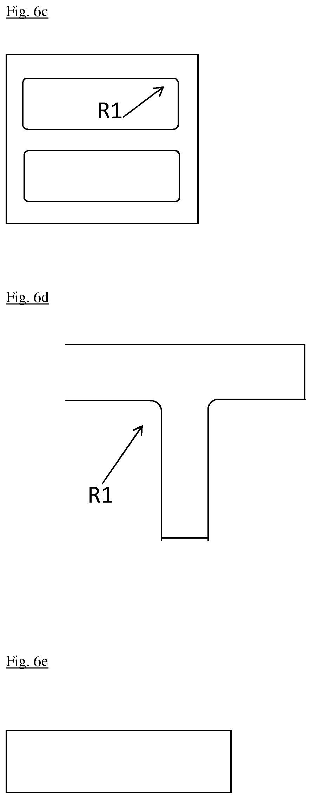

**Figur 6c:** Draufsicht auf die Vorderseite einer Doppel-O-Blende;

**Figur 6d:** Draufsicht auf die Vorderseite einer T-Blende;

**Figur 6e:** Draufsicht auf die Vorderseite eine I-Blende;

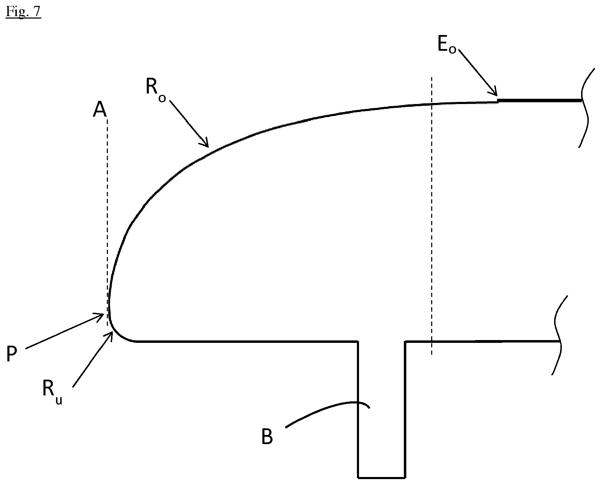

**Figur 7:** eine Querschnittsansicht des Randbereichs einer Blende mit Rippe im Randbereich.

Fig. 1 zeigt eine Blende mit U-förmiger Geometrie (kurz: U-Blende), aufweisend einen ersten und einen zweiten äußeren Schenkel SI, S2 und einen die Schenkel S1 und S2 verbindenden Schenkel S3 mit hervorgehobenem Bereich X des Innenwinkels R1 zwischen den Schenkeln S2 und S3 der Blende. Der Innenwinkel zwischen den Schenkeln S3 und S1 ist bevorzugt identisch zu den Innenwinkel zwischen den Schenkeln S3 und S2 ausgebildet, kann jedoch auch eine abweichende Geometrie aufweisen. Der Innenwinkel R1 beschreibt etwa einen Viertelkreis. Der Radius dieses Viertelkreises ist mit "Ri" bezeichnet. Zum besseren Verständnis der Geometrien ist außerdem ein Koordinatensystem zur Orientierung eingezeichnet. Es ist zu erkennen, dass sich die Flächen der Vorder- und der Rückseite der Blende in x/y-Ebene erstrecken, was dementsprechend auch für den abgerundeten Übergangsbereich zwischen den Schenkeln S3 und S1 mit dem Innenwinkel R1 gilt. Nachfolgend wird noch das erfindungswesentliche Merkmal der Kantenverrundung in z-Richtung erläutert.

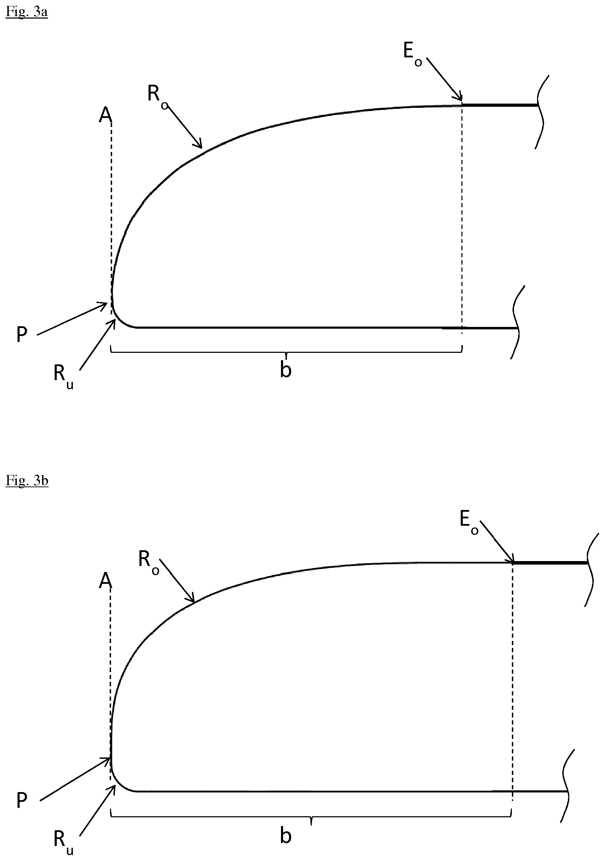

Fig. 2 zeigt die Rückansicht der U-Blende aus Fig. 1. Deutlich sind hier die Kleberaupen H zu erkennen. Durch den abgerundeten Innenwinkel zwischen den Schenkeln S1 und S3 verläuft die Schnittlinie A'-A'. In den nachfolgenden Fig. 3a bis 3f sind Querschnittsansichten der Blende entlang dieser Schnittlinie in diversen alternativen Ausgestaltungen gezeigt. Erkennbar sind die obere verrundete Kante $R_o$ und die untere verrundete Kante $R_u$. Der äußerste Endpunkt der Blende an der verrundeten Kante ist mit "P" bezeichnet. Durch diesen Endpunkt P verläuft eine gedachte Gerade A, welche senkrecht zur Erstreckung von Vorder- und Rückseite der Blende angeordnet ist. Die Stelle, an welcher der abgerundete Bereich der verrundeten Kante in die eigentliche Vorderseite der Blende übergeht, d.h. i.d.R. in einen Oberflächenverlauf ohne Krümmung übergeht, ist mit "$E_o$" bezeichnet. Der Abstand zwischen der Gerade A, die durch den Punkt P verläuft, und einer Senkrechten, die durch den Punkt $E_o$ verläuft, wobei die Senkrechten orthogonal zur Rückseite der Blende verlaufen, ist mit "b" bezeichnet.

Bei der in Fig. 3a gezeigten Ausführungsform ist die obere Kantenverrundung in Form einer Bezierkurve ausgebildet. Ein gerader, senkrecht zur Vorder- und Rückseite angeordneter Übergangsbereich zwischen der oberen und der unteren verrundeten Kante, $R_o$ und $R_u$, ist nicht vorhanden. Der Endpunkt P ist somit tatsächlich punktförmig ausgebildet, während der äußerste Endpunkt P im Falle der in Fig. 3d gezeigten Ausführungsform auf einem geraden Übergangsabschnitt auf der zur Vorder- und Rückseite der Blende senkrechten Gerade A liegt.

In Fig. 3b ist die obere Kante $R_o$ in Form einer Bezierkurve verrundet. Die untere Kante $R_u$ ist einfach verrundet. Der Punkt $E_o$ ist der Punkt, an dem die Bezierkurve endet. Ein gerader, zur Vorder- und Rückseite der Blende senkrechter Übergangsabschnitt zwischen den beiden verrundeten Kanten an den die Vorder- und die Rückseite der Blende verbindenden Seiten ist vorhanden.

Bei der Ausführungsform gemäß Fig. 3c ist die obere Kante $R_o$ in Form einer Bezierkurve verrundet. Die untere Kante $R_u$ ist ebenfalls in Form einer Bezierkurve, und zwar in Form einer quadratischen Bezierkurve, verrundet. Ein gerader, zur Vorder- und Rückseite der Blende senkrechter Übergangsabschnitt zwischen den beiden verrundeten Kanten an den die Vorder- und die Rückseite der Blende verbindenden Seiten ist nicht vorhanden.

Bei der in Fig. 3e gezeigten Ausführungsform ist lediglich die obere Kante $R_o$ verrundet, während es sich bei der unteren Kante $R_u$ um eine übliche "eckige Kante" handelt, wobei eine "eckige Kante" durchaus eine fertigungsbedingte minimale Abrundung aufweisen kann. Die obere Kante $R_o$ ist mit über die Verrundung variierendem Radius verrundet, und zwar in Form einer Bezierkurve. Die Verrundung der oberen Kante $R_o$ geht direkt in die untere eckige Kante $R_u$ über, so dass die vertikale Ausdehnung des äußersten Endpunkts P gleich 0 ist.

Demgegenüber weist der Abschnitt P bei der in Fig. 3f gezeigten Ausführungsform eine Ausdehnung größer 0 auf, d.h. im Querschnitt der Seite, welche die Vorder- und die Rückseite der Blende verbindet, liegt teilweise eine Gerade vor.

Fig. 4 zeigt noch einmal wie in Figur 2a die Rückseite der U-Blende, einschließlich des mit "X" markierten Bereichs am Kreuzungspunkt zwischen zwei Schenkeln. Dieser Bereich "X" ist für bestimmte Ausgestaltungen in den Figuren 5a bis 5c vergrößert dargestellt, bei welchen Rippen senkrecht auf die Fläche der Rückseite der Blende gesetzt sind. Diese Rippen können, wie in Fig. 5a gezeigt, eine von Aussparungen L unterbrochene Rippenstruktur bilden oder aber, wie in Fig. 5b gezeigt, eine zusammenhängende Rippenlinie G bilden. Möglich ist auch eine zusammenhängende Rippenlinie G, welche Einbuchtungen F aufweist, wie in Fig. 5c gezeigt ist. Es ist außerdem in Fig. 4 zu erkennen, dass die Kleberaupen nicht durchgehend sind, sondern Unterbrechungen aufweisen.

Aussparungen L zwischen zwei Rippen werden üblicherweise für z.B. Wassermanagement vorgesehen. Bevorzugt werden erfindungsgemäß jedoch Aussparungen zwischen den einzelnen Rippen vermieden, oder aber, wenn erforderlich, als Einbuchtungen F ausgebildet. Die Aussparungen bedeuten lokale Unterschiede in der Steifigkeit, die zu Spannungskonzentrationen und somit höheren Dehnungswerten führen.

Die Figuren 6a bis 6e zeigen verschiedene bevorzugte Blendengeometrien, und zwar eine U-Blende (Fig. 6a), eine O-Blende (Fig. 6b), eine Doppel-O-Blende (Fig. 6c), eine T-Blende (6d) und eine I-Blende (Fig. 6e).

Die Figur 7 zeigt einen Querschnitt des Randbereichs einer erfindungsgemäßen Blende, bei der eine Rippe B im Randbereich vorliegt. Die Einfallstelle in der Vorderseite der Basisschicht der Blende ist nicht eingezeichnet, da diese zwar vorhanden, aber lediglich minimal ausgeprägt ist. Die obere Kante $R_o$ ist in Form einer Bezierkurve verrundet. Die Rippe liegt vor dem Punkt $E_o$, d.h. vor dem Punkt, an welchem der abgerundete Bereich der verrundeten Kante in die eigentliche Vorderseite der Blende übergeht, d.h. in einen Oberflächenverlauf ohne Krümmung.

**Bezugszeichenliste**

R1    Innenwinkel (abgerundeter Bereich zwischen zwei Schenkeln)
X    vergrößert gezeigter Bereich um den Innenwinkel R1
P    äußerster Endpunkt der Blende bei der verrundeten Kante, ggf. als gerader Übergangsabschnitt zwischen der oberen und der unteren verrundeten Kante
A    senkrecht zur Ebene der Vorder- und Rückseite angeordnete Gerade durch P
r    Radius für einen fiktiven Kreis, auf dessen Linie der jeweils betrachtete Punkt der verrundeten Kante liegt
$E_o$    Stelle, an welcher der abgerundete Bereich der verrundeten Kante in die eigentliche Vorderseite der Blende übergeht, d.h. i.d.R. in einen Oberflächenverlauf ohne Krümmung übergeht
b    Breite des Bereichs zwischen A und E
L    Aussparung in einer Rippenstruktur
G    Rippe
F    Einbuchtung in einer Rippe
H    Kleberaupe
S    Schenkel

$R_o$     obere verrundete Kante

$R_u$     untere verrundete Kante

Ri     Radius für den abgerundeten Bereich des Innenwinkels zwischen zwei Schenkeln (x/y-Ebene)

B     Rippe

**Patentansprüche**

1. Blende für Kraftfahrzeugverscheibungssysteme, umfassend eine Basisschicht, basierend auf einem thermoplastischen Kunststoff, mit einer Vorderseite und einer Rückseite sowie die Vorder- und die Rückseite verbindenden Seiten, wobei die Blende auf der Vorderseite und im verrundeten Kantenbereich der Vorderseite eine Beschichtung aufweist, **dadurch gekennzeichnet, dass** die Kanten zwischen den die Vorder- und die Rückseite der Basisschicht verbindenden Seiten und der Vorderseite der Basisschicht verrundet sind, wobei die Verrundung einen über die Verrundung variablen Radius aufweist.

2. Blende nach Anspruch 1, **dadurch gekennzeichnet, dass** die Blende eine U-, O-, Doppel-O-, T- oder I-Geometrie, bezogen auf die Rückseite und die Vorderseite der Blende, aufweist.

3. Blende nach Anspruch 1 oder 2, **dadurch gekennzeichnet, dass** die Kanten zwischen den die Vorder- und die Rückseite der Basisschicht verbindenden Seiten und der Rückseite der Basisschicht verrundet sind.

4. Blende nach Anspruch 3, wobei die Blende auf der Rückseite eine Beschichtung aufweist.

5. Blende nach einem der Ansprüche 1 bis 4, **dadurch gekennzeichnet, dass** mindestens die Verrundung der Kanten zwischen den die Vorder- und die Rückseite der Basisschicht verbindenden Seiten und der Vorderseite der Basisschicht in Form einer Bezierkurve ausgebildet oder einer solchen angenähert ist.

6. Blende nach Anspruch 5, **dadurch gekennzeichnet, dass** die Bezierkurve quadratisch oder kubisch ist.

7. Blende nach einem der vorhergehenden Ansprüche, **dadurch gekennzeichnet, dass** die Blende eine U-, O-, Doppel-O- oder T-Geometrie aufweist, wobei mindestens ein zwischen zwei Schenkeln der Blende liegender Innenwinkel R1 abgerundet ist, wobei der Innenwinkel R1 genau oder annähernd einen Viertelkreis beschreibt.

8. Blende nach Anspruch 7, **dadurch gekennzeichnet, dass** der Radius des Viertelkreises mindestens 10 mm beträgt.

9. Blende nach einem der vorhergehenden Ansprüche, **dadurch gekennzeichnet, dass** die Breite b des Bereichs zwischen dem äußersten Punkt P der Blende bei der verrundeten Kante und der Stelle E, an welcher der verrundete Bereich in einen Oberflächenverlauf ohne Krümmung übergeht, mindestens 2,5 mm beträgt.

10. Blende nach einem der vorhergehenden Ansprüche, **dadurch gekennzeichnet, dass** die Wanddicke der Blende 1,5 mm bis 5 mm beträgt.

11. Blende nach einem der vorhergehenden Ansprüche, **dadurch gekennzeichnet, dass** die Blende mehrere Schichten umfasst, von denen eine eine Basisschicht, enthaltend Polycarbonat, ggf. Ruß, und ein Entformungsmittel auf Basis eines Fettsäureesters, ist, und wobei auf mindestens einer Seite der Basisschicht eine Kratzfestbeschichtung auf Polysiloxanbasis, enthaltend mindestens einen UV-Absorber, ist.

12. Blende nach Anspruch 11, **dadurch gekennzeichnet, dass** als Ruß nanoskaliger Ruß mit einer mittleren Primärpartikelgröße von weniger als 100 nm, bestimmt durch Rasterelektronenmikroskopie, enthalten ist.

13. Blende nach einem der vorhergehenden Ansprüche, **dadurch gekennzeichnet, dass** die Blende auf der Rückseite eine Rippe aufweist, die, bezogen auf den Querschnitt der Blende, im Bereich der Kantenverrundung zwischen den die Vorder- und die Rückseite der Basisschicht verbindenden Seiten und der Vorderseite der Basisschicht liegt.

14. Verbundsystem umfassend eine Karosserie eines Kraftfahrzeugs und eine Blende gemäß einem der vorhergehenden Ansprüche.

15. Verfahren zur Herstellung einer Blende nach einem der Ansprüche 1 bis 13, umfassend die folgenden Schritte:

- Schließen des Spritzgießwerkzeugs,
- Einspritzen einer ersten Polymerzusammensetzung, bevorzugt über Spritzprägen oder Kaskadenspritzguss, anschließende Abkühlung auf eine maximale Bauteiltemperatur kleiner als die Glastemperatur der ersten Polymerzusammensetzung,
- ggf. Führen der Kavität in die nächste Position oder Verwendung eines Werkzeugs mit einer größeren Kavität zwecks Einspritzen einer zweiten Polymerzusammensetzung, so dass beim Schließen des Werkzeuges in dieser Position ein Zwischenraum zwischen der ersten verfestigten Polymerzusammensetzung und der Werkzeugwand entsteht,
- ggf. Einspritzen der zweiten Polymerzusammensetzung, anschließende Abkühlung auf eine maximale Bauteiltemperatur kleiner als die Glastemperatur der zweiten Polymerzusammensetzung,
- Beschichtung der Blende.

**Claims**

1. Bezel for motor vehicle glazing systems, comprising a base layer based on a thermoplastic, with a front side and a reverse side, and also sides connecting the front side and the reverse side, wherein the bezel has a coating on the front side and in the rounded edge region of the front side, **characterized in that** the edges between the sides connecting the front side and the reverse side of the base layer and the front side of the base layer have been rounded, wherein the rounding has a radius that is variable across the rounding.

2. Bezel according to Claim 1, **characterized in that**, in relation to the reverse side and the front side of the bezel, the bezel is U-shaped, O-shaped, double-O-shaped, T-shaped or I-shaped.

3. Bezel according to Claim 1 or 2, **characterized in that** the edges between the sides connecting the front side and the reverse side of the base layer and the reverse side of the base layer have been rounded.

4. Bezel according to Claim 3, wherein the bezel has a coating on the reverse side.

5. Bezel according to any of Claims 1 to 4, **characterized in that** at least the rounding of the edges between the sides connecting the front side and the reverse side of the base layer and the front side of the base layer has the shape of, or approximately the shape of, a Bezier curve.

6. Bezel according to Claim 5, **characterized in that** the Bezier curve is quadratic or cubic.

7. Bezel according to any of the preceding claims, **characterized in that** the bezel is U-shaped, O-shaped, double-O-shaped or T-shaped, wherein at least one internal angle R1 situated between two legs of the bezel has been rounded, wherein the internal angle R1 describes, precisely or approximately, a quadrant.

8. Bezel according to Claim 7, **characterized in that** the radius of the quadrant is at least 10 mm.

9. Bezel according to any of the preceding claims, **characterized in that** the width b of the region between the outermost point P of the bezel at the rounded edge and the point E at the transition between the rounded region and a surface without curvature is at least 2.5 mm.

10. Bezel according to any of the preceding claims, **characterized in that** the wall thickness of the bezel is from 1.5 mm to 5 mm.

11. Bezel according to any of the preceding claims, **characterized in that** the bezel comprises a plurality of layers of which one is a base layer comprising polycarbonate, optionally carbon black, and a mold-release agent based on a fatty acid ester, and wherein there is, on at least one side of the base layer, a polysiloxane-based scratch-resistant coating comprising at least one UV absorber.

12. Bezel according to Claim 11, **characterized in that** carbon black present comprises nanoscale carbon black with average primary particle size less than 100 nm, determined by scanning electron microscopy.

13. Bezel according to any of the preceding claims, **characterized in that** the bezel has, on the reverse side, a rib which, in relation to the cross section of the bezel, is in the region of the edge rounding between the sides connecting the front side and the reverse side of the base layer and the front side of the base layer.

14. Compound-structure system comprising bodywork of a motor vehicle and comprising a bezel according to any of the preceding claims.

15. Process for the production of a bezel according to any of Claims 1 to 13, comprising the following steps:

- closure of the injection mold,
- injection of a first polymer composition, preferably by way of injection-compression molding or cascade injection molding, then cooling to a maximal component temperature lower than the glass transition temperature of the first polymer composition,
- optional moving of the cavity into the next position or use of a mold with a larger cavity for purposes of injection of a second polymer composition, in such a way that on closure of the mold in this position an intervening space is produced between the first hardened polymer composition and the mold wall,
- optional injection of the second polymer composition, then cooling to a maximal component temperature lower than the glass transition temperature of the second polymer composition,
- coating of the bezel.

**Revendications**

1. Écran pour systèmes de vitre de véhicule automobile, comprenant une couche de base, à base d'un plastique thermoplastique, comportant une face avant et une face arrière ainsi que des faces reliant la face avant et la face arrière, l'écran présentant un revêtement sur la face avant et dans la zone de bord arrondi de la face avant, **caractérisé en ce que** les bords entre les faces reliant la face avant et la face arrière de la couche de base et la face avant de la couche de base sont arrondis, l'arrondissement présentant un rayon variable sur l'arrondissement.

2. Écran selon la revendication 1, **caractérisé en ce que** l'écran présente une géométrie en U, une géométrie en O, une géométrie en O double, une géométrie en T ou une géométrie en I, par rapport à la face arrière et à la face avant de l'écran.

3. Écran selon la revendication 1 ou 2, **caractérisé en ce que** les bords entre les faces reliant la face avant et la face arrière de la couche de base et la face arrière de la couche de base sont arrondis.

4. Écran selon la revendication 3, l'écran présentant un revêtement sur la face arrière.

5. Écran selon l'une quelconque des revendications 1 à 4, **caractérisé en ce qu'**au moins l'arrondissement des bords entre les faces reliant la face avant et la face arrière de la couche de base et la face avant de la couche de base est formé sous forme d'une courbe de Bézier ou se rapproche d'une telle courbe.

6. Écran selon la revendication 5, **caractérisé en ce que** la courbe de Bézier est quadratique ou cubique.

7. Écran selon l'une quelconque des revendications précédentes, **caractérisé en ce que** l'écran présente une géométrie en U, une géométrie en O, une géométrie en O double ou une géométrie en T, au moins un angle intérieur R1 situé entre deux côtés de l'écran étant arrondi, l'angle intérieur R1 décrivant exactement ou approximativement un quart de cercle.

8. Écran selon la revendication 7, **caractérisé en ce que** le rayon du quart de cercle est d'au moins 10 mm.

9. Écran selon l'une quelconque des revendications précédentes, **caractérisé en ce que** la largeur b de la zone entre le point le plus à l'extérieur P de l'écran du bord arrondi et l'emplacement E, au niveau duquel la zone arrondie se transforme en un tracé de surface sans courbure, est d'au moins 2,5 mm.

10. Écran selon l'une quelconque des revendications précédentes, **caractérisé en ce que** l'épaisseur de paroi de l'écran est de 1,5 à 5 mm.

11. Écran selon l'une quelconque des revendications précédentes, **caractérisé en ce que** l'écran comprend plusieurs couches, parmi lesquelles l'une est une couche de base contenant un polycarbonate, éventuellement une suie, et un agent de démoulage à base d'un ester d'acide gras, et sur au moins une face de la couche de base se trouve un revêtement anti-rayures à base de polysiloxane, contenant au moins un absorbant UV.

12. Écran selon la revendication 11, **caractérisé en ce que** de la suie nanométrique est contenue en tant que suie, dotée d'une taille moyenne de particule primaire inférieure à 100 nm, déterminée par microscopie électronique à balayage.

13. Écran selon l'une quelconque des revendications précédentes, **caractérisé en ce que** l'écran présente une nervure sur la face arrière, qui, par rapport à la section de l'écran, se situe dans la zone de l'arrondissement de bord entre les faces reliant la face avant et la face arrière de la couche de base.

14. Système composite comprenant une carrosserie d'un véhicule automobile et un écran selon l'une quelconque des revendications précédentes.

15. Procédé pour la préparation d'un écran selon l'une quelconque des revendication 1 à 13, comprenant les étapes suivantes :

    - fermeture de l'outil de moulage par injection,
    - injection d'une première composition de polymère, préférablement par injection-compression ou par moulage par injection en cascade, puis refroidissement à une température maximale de composant inférieure à la température de transition vitreuse de la première composition de polymère,
    - éventuellement, guidage de la cavité dans la prochaine position ou utilisation d'un outil doté d'une cavité plus grosse en vue de l'injection d'une deuxième composition de polymère, de sorte que lors de la fermeture de l'outil dans cette position, un espace intermédiaire est produit entre la première composition de polymère solidifiée et la paroi de l'outil,
    - éventuellement, injection de la deuxième composition de polymère, puis refroidissement à une température maximale de composant inférieure à la température de transition vitreuse de la deuxième composition de polymère,
    - revêtement de l'écran.

Fig. 1

Fig. 2

Fig. 3a

Fig. 3b

Fig. 3c

Fig. 3d

Fig. 3e

Fig. 3f

Fig. 4

Fig. 5a

Fig.5b

Fig. 5c

F

Fig. 6a

R1

Fig. 6b

R1

Fig. 6c

Fig. 6d

R1

Fig. 6e

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013079478 A1
- DE 2035390 A
- US 3644574 A
- DE 2248242 A
- GB 1409275 A
- EP 0517044 A1
- DE 1031512 B
- US 6228973 B1
- WO 2008037364 A1
- EP 1582549 A1
- WO 2002026862 A1
- WO 2005113639 A1
- US 4185009 A
- DE 2500092 A1
- DE 4240313 A1
- DE 19943642 A1
- US 5367044 A
- EP 1506249 A1
- EP 0839623 A1
- WO 9615102 A2
- EP 0500496 A
- EP 1308084 A1
- DE 102007011069 A1
- DE 10311063 A1
- EP 1559743 A1
- EP 1865027 A1
- DE 10022037 A1
- DE 10006208 A1
- IT RM20100225 A
- IT RM20100227 A
- IT RM20100228 A

**In der Beschreibung aufgeführte Nicht-Patentliteratur**

- **ULLMANN.** Enzyklopädie der Technischen Chemie. 1980, vol. 19, 280 ff
- Chemistry and Physics of Polycarbonates. **H. SCHNELL.** Polymer Reviews. Interscience Publishers, 1964, vol. 9, 33 ff
- Condensation Polymers by Interfacial and Solution Methods. **PAUL W. MORGAN.** Polymer Reviews. Interscience Publishers, 1965, vol. 10, 325
- Becker/Braun, Kunststoff-Handbuch, Band 3/1, Polycarbonate, Polyacetale, Polyester, Celluloseester. **DRES. U. GRIGO ; K. KIRCHER ; P. R. MÜLLER.** Polycarbonate. Carl Hanser Verlag München, 1992, vol. 3/1, 118-145
- Encyclopedia of Polymer Science. 1969, vol. 10
- Chemistry and Physics of Polycarbonates. **H. SCHNELL.** Polymer Reviews. John Wiley and Sons, Inc, 1964, vol. 9
- **HANS ZWEIFEL.** Plastics Additives Handbook. Hanser Verlag, 2000